# EUROPÄISCHE PATENTSCHRIFT

(11) **EP 1 526 917 B1**
(45) Veröffentlichungstag und Bekanntmachung des Hinweises auf die Patenterteilung: **14.03.2007**
(21) Anmeldenummer: 03784197.0
(22) Anmeldetag: 07.08.2003
(51) Int. Cl.: B01J 31/22, C07F 15/00

(54) **NEUE NICKEL-, PALLADIUM- UND PLATIN-CARBENKOMPLEXE, IHRE HERSTELLUNG UND VERWENDUNG IN KATALYTISCHEN REAKTIONEN**
NOVEL NICKEL-CARBENE, PALLADIUM-CARBENE AND PLATINUM-CARBENE COMPLEXES, THEIR PRODUCTION AND USE IN CATALYTIC REACTIONS
NOUVEAUX COMPLEXES CARBENE-NICKEL, CARBENE-PALLADIUM ET CARBENE-PLATINE, LEUR PRODUCTION ET LEUR UTILISATION DANS DES REACTIONS CATALYTIQUES

(30) Priorität: 07.08.2002 DE 10236079; 28.02.2003 DE 10308905
(43) Veröffentlichungstag der Anmeldung: 04.05.2005
(73) Patentinhaber: Umicore AG & Co. KG, 63457 Hanau (DE)
(72) Erfinder: KARCH, Ralf, 63801 Kleinostheim (DE); BRIEL, Oliver, 63067 Offenbach (DE); KAYSER, Bernd, 63739 Aschaffenburg (DE); BELLER, Matthias, 18211 Ostseebad Nienhagen (DE); SELVAKUMAR, Kumaravel, 561229 Electronic City B. Lore (IN); FRISCH, Anja, 18055 Rostock (DE); ZAPF, Alexander, 83024 Rosenheim (DE)
(74) Vertreter: Vossius & Partner
(86) Internationale Anmeldenummer: PCT/EP2003/008780
(87) Internationale Veröffentlichungsnummer: WO 2004/014550

(56) Entgegenhaltungen:
- DE-A- 10 062 577
- US-A- 5 703 269
- MCGUINNESS, DAVID S. ET AL: "Zerovalent Palladium and Nickel Complexes of Heterocyclic Carbenes: Oxidative Addition of Organic Halides, Carbon-Carbon Coupling Processes, and the Heck Reaction" ORGANOMETALLICS (1999), 18(9), 1596-1605 , XP002260230

## Beschreibung

Die vorliegende Erfindung betrifft neue Nickel-; Palladium- und Platin-Carbenkomplexe, ihre Herstellung und Verwendung in katalytischen Reaktionen.

Mehr als 80% der industriell produzierten Chemikalien werden durch katalytische Prozesse hergestellt. Katalytische Prozesse sind i. a. ökonomischer und umweltfreundlicher als entsprechende stöchiometrische organische Reaktionen. Als homogene Katalysatoren werde dabei neben Säuren und Basen insbesondere Komplexverbindungen der Edelmetalle eingesetzt. Auch Nickel-, Palladium- und Platin-Komplexe finden als homogene Katalysatoren in zahlreichen industriellen Prozessen und in der organischen Synthese im Labormaßstab Verwendung. Ein wichtiges Beispiel ist die Veredelung von Aryl-X-Verbindungen (X = Halogen, OTf, N₂⁺, OMs, C(O)Cl etc.). Insbesondere Brom- und Chloraromaten sind vielfältig nutzbare Zwischenprodukte der chemischen Industrie, z.B. als Vorprodukte für die Herstellung von Agrointermediaten, Pharmazeutika, Farbstoffen, Werkstoffen etc. Daneben sind Nickel- und Palladiumkatalysatoren häufig angewandte Katalysatoren zur Funktionalisierung von Halogenaromaten oder Vinylhalogeniden zu aromatischen Olefinen bzw. Dienen (Heck-Reaktion, Stille-Reaktion), Biarylen (Suzuki-Reaktion, Stille-Reation, Kumada-Reaktion, Negishi-Reaktion), Alkinen (Sonogashira-Reaktion), Carbonsäurederivaten (Heck-Carbonylierung), Aminen (Buchwald-Hartwig-Reaktion).

Die für Olefinierungen, Alkinylierungen, Carbonylierungen, Arylierungen, Aminierungen und ähnliche Reaktionen von Aryl-X-Verbindungen beschriebenen Katalysatorsysteme weisen häufig nur mit nichtökonomischen Ausgangsmaterialien wie lodaromaten und aktivierten Bromaromaten befriedigende katalytische Wechselzahlen (turnover number = TON) auf.

Dagegen müssen bei deaktivierten Bromaromaten und insbesondere bei Chloraromaten generell große Mengen an Katalysator zugesetzt werden, um technisch nutzbare Ausbeuten (> 90%) zu erzielen. Aufgrund der Komplexität der Reaktionsgemische ist zudem kein einfaches Katalysatorrecycling möglich, so dass auch die Rückführung des Katalysators hohe Kosten verursacht, die in der Regel einer technischen Realisierung entgegenstehen. Darüber hinaus ist es besonders bei der Herstellung von Wirkstoffen bzw. Wirkstoffvorprodukten unerwünscht, mit großen Mengen an Katalysator zu arbeiten, da diesem Fall die Gefahr besteht, dass Katalysatorrückstände im Produkt verbleiben. Neuere Katalysatorsysteme basieren auf cyclopalladierten Phosphanen (W. A. Herrmann, C. Broßmer, K. Öfele, C.-P. Reisinger, T. Priermeier, M. Beller, H. Fischer, *Angew. Chem.* **1995**, *107,* 1989; *Angew. Chem. Int. Ed. Engl.* **1995**, *34*, 1844) oder Gemischen von sterisch anspruchsvollen Arylphosphanen (J. P. Wolfe, S. L. Buchwald, *Angew. Chem.* **1999,** 111, 2570; *Angew. Chem. Int. Ed. Engl.* **1999,** 38, 2413) bzw. Tri-tert. butylphosphan (A. F. Littke, G. C. Fu, *Angew. Chem.* **1998,** *110,* 3586; *Angew. Chem. Int. Ed. Engl.* **1998,** *37*, 3387) mit Palladiumsalzen oder Palladiumkomplexen.

Kostengünstige Chloraromaten sind jedoch auch mit solchen Katalysatoren nicht immer technisch befriedigend mittels oben beschriebener Reaktionen zuderivatisieren. Die Katalysatorproduktivitäten (ausgedrückt als TON) liegen für die genannten Reaktionen typischerweise unter 10.000, und die Katalysatoraktivitäten (turnover frequency = TOF) bei unter 1.000 h⁻¹. Somit müssen für das Erreichen von hohen Ausbeuten vergleichsweise hohe Mengen des teuren Katalysators eingesetzt werden. Daher sind trotz aller Weiterentwicklungen der Katalysatoren in den letzten Jahren bis dato nur wenige industrielle Umsetzungen der Arylierung, Carbonylierung, Olefinierung etc. von Chloraromaten bekannt geworden.

Ein wichtiges Beispiel für die industrielle Verwendung von Platinkatalysatoren ist die Hydrosilylierung, z.B. bei der Herstellung von Organosilanen oder bei der Vernetzung von Siliconkautschuk. Auch bei solchen Reaktionen ist natürlich die Produktivität und die Reaktivität des Katalysators ein erheblicher Faktor für dessen industrielle Anwendbarkeit.

Die aktiven Palladiumkatalysatoren, die gewöhnlich im Rahmen der Aktivierung und weiteren Veredelung von Aryl-X-Verbindungen verwendet werden, sind Palladium(0)-Komplexe. Ähnlich verhält sich die Situation bei Nickelkatalysatoren. Platinkatalysatoren, die bei der Hydrosilylierung eingesetzt werden, sind sowohl Platin(IV), Platin(II) als auch Platin(0)-Komplexe, wobei insbesondere die Platin(0)-Komplexe eine hohe Aktivität besitzen und weite Verbreitung gefunden haben.

Der vorliegenden Erfindung liegt die Aufgabe zugrunde, neue Nickel-, Palladium- und Platin-Komplexe bereitzustellen, die auch bei Reaktionen technischen Maßstabs direkt als Katalysatoren eingesetzt werden können. Dabei sollen die erfindungsgemäßen Komplexe aufgrund ihrer Struktur aktive und produktive Katalysatorsysteme liefern, die über einen möglichst breiten Temperatur- und Druckbereich stabil sind. Die Komplexe sollen weiter mit vertretbarem Aufwand aus verfügbaren Ausgangsverbindungen herzustellen sein und in ihrer Handhabung keine Probleme bereiten, die ihrem Einsatz in industriellen Verfahren entgegenstehen könnten.

Diese Aufgabe wird erfindungsgemäß gelöst durch neue Nickel-, Palladium- und Platin-Komplexe der Formel (I),

L¹-M-L² (I)

wobei
M für ein Nickel-, Palladium- oder Platinatom,
L¹ für einen Liganden mit mindestens einer elektronenarmen olefinischen Doppelbindung und
L² für einen monodentaten Carbenliganden der Formel (II) oder (III) steht, 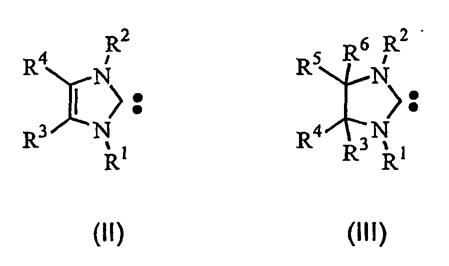 in denen
R¹ und R² unabhängig voneinander einen Alkylrest einschließlich eines Cycloalkylrestes, einen Arylrest oder Heteroarylrest darstellen, die gegebenenfalls substituiert sein können,
und die Reste R³ bis R⁶ unabhängig voneinander ausgewählt sind aus einem Wasserstoff- oder Halogenatom, -NO₂, -CN, -COOH, -CHO, -SO₃H, -SO₂-(C₁-C₈)Alkyl, -SO-(C₁-C₈)Alkyl, -NH-(C₁-C₈)Alkyl, -N(C₁-C₈)Alkyl)₂, -NHCO-(C₁-C₄)Alkyl, -CF₃, -COO-(C₁-C₈)Alkyl, -CONH₂, -CO-(C₁-C₈)Alkyl, -NHCOH, -NHCOO-(C₁-C₄)Alkyl, -CO-Phenyl, -COO-Phenyl, -CH=CH-CO₂-(C₁-C₈)Alkyl, -CH=CHCO₂H, -PO(Phenyl)₂, -PO((C₁-C₈)Alkyl)₂, einem gegebenenfalls substituierten Alkylrest, einem -gegebenenfalls substituierten Arylrest, oder einem gegebenenfalls substituierten Heteroarylrest, oder mindestens zwei der Reste R³ bis R⁶ gemeinsam mit den Kohlenstoffatomen, an die sie gebunden sind, einen Ring bilden.

Soweit nicht gesondert angegeben, umfasst ein Alkylrest im Rahmen der vorliegenden Erfindung bevorzugt 1 bis 18, besonders bevorzugt 1 bis 12 und ganz besonders bevorzugt 1 bis 8 Kohlenstoffatome, wie beispielsweise eine Methyl-, Ethyl-, iso-Propyl-, n-Propyl-, n-Butyl-, tert-Butyl- oder Hexylgruppe. Er kann linear oder verzweigt sein oder eine cyclische Struktur, insbesondere eine cyclische Struktur mit C₃-C₁₈, bevorzugt C₅-C₁₀, wie z.B. einen Cyclohexyl- oder Adamantylrest, bilden. Ein substituierter Alkylrest trägt einen oder mehrere Substituenten, die unabhängig voneinander bevorzugt ausgewählt werden aus - O-(C₁-C₈)Alkyl, -O-CO-(C₁-C₈)Alkyl, -OPhenyl, -Phenyl, einem Halogenatom, - OH, -NO₂, -CN, -COOH, -CHO, -SO₃H, -SO₂-(C₁-C₈)Alkyl, -SO-(C₁-C₈)Alkyl, - NH₂, -NH-(C₁-C₈)Alkyl, -N((C₁-C₈)Alkyl))₂, -NHCO-(C₁-C₄)Alkyl, -CF₃, -COO-(C₁-C₈)Alkyl, -CONH₂, -CO-(C₁-C₈)Alkyl, -NHCOH, -NHCOO-(C₁-C₄)Alkyl₁, -CO-Phenyl, -COO-Phenyl, -CH=CH-CO₂-(C₁-C₈)Alkyl, -CH=CHCO₂H, -PO(Phenyl)₂ und -PO((C₁-C₈)Alkyl)₂.

Bevorzugt kann ein substituierter Alkylrest bis zu 8, besonders bevorzugt 1, 2, 3, 4 oder 5 gleiche oder verschiedene Substituenten tragen.

Soweit nicht gesondert angegeben, umfasst ein Arylrest im Rahmen der vorliegenden Erfindung bevorzugt 6 bis 14, besonders bevorzugt 6 bis 10 und ganz besonders bevorzugt 6 Kohlenstoffatome, wie z.B. eine Phenyl-, Naphtyl oder eine Anthrylgruppe. Ein substituierter Arylrest trägt einen oder mehrere Substituenten, die unabhängig voneinander bevorzugt ausgewählt werden können aus -(C₁-C₈)Alkyl, -O-(C₁-C₈)Alkyl, -OCO-(C₁-C₈)Alkyl, -O-Phenyl, -Phenyl, -(C₆-C₁₄)Aryl, einem Halogenatom, -OH, -NO₂, -Si((C₁-C₈)Alkyl)₃, -CF₃, -CN, -COOH, -CHO, -SO₃H, -NH₂, NH-(C₁-C₈)Alkyl, -N-((C₁-C₈)Alkyl)₂, -P((C₁-C₈)Alkyl)₂, -SO₃ -(C₁-C₄)Alkyl, -SO₂-(C₁-C₆)Alkyl, -SO-(C₁-C₆)Alkyl, -CF₃, -NHCO-(C₁-C₄)Alkyl, -COO-(C₁-C₈)Alkyl, -CONH₂, -CO-(C₁-C₈)Alkyl, -NHCOH, -NHCOO-(C₁-C₄)Alkyl, -CO-Phenyl, -COO-Phenyl, -COO-(C₆-C₁₀)Aryl, -CO-(C₆-C₁₀)Aryl, -CH=CH-CO₂-(C₁-C₈)Alkyl, -CH=CHCO₂H, -P(Phenyl)₂, -P((C₁-C₈)Alkyl)₂, -PO(Phenyl)₂, -PO((C₁-C₄)Alkyl)2, -PO₃H₂ und -PO(O-(C₁-C₆)Alkyl)₂.

Bevorzugt kann ein Arylrest bis zu 8, besonders bevorzugt 1, 2, 3, 4 oder 5 gleiche oder verschiedene Substituenten tragen.

Soweit nicht gesondert angegeben, ist ein Heteroarylrest im Rahmen der vorliegenden Erfindung bevorzugt ein fünf-, sechs- oder siebengliedriger Ring der neben Kohlenstoff ein oder mehrere, beispielsweise 2 oder 3, Heteroatome umfasst, die vorzugsweise aus Stickstoff-, Sauerstoff- und/oder Schwefelatomen ausgewählt sind, wie z.B. eine Pyrrolidinyl-, Imidazolidinyl-, Pyrazolidinyl-, Piperidyl-, Tetrahydrofuryl-, Tetrahydropyryl- oder Piperazinylgruppe. Ein substituierter Heteroarylrest einen oder mehrere Substituenten aufweisen, die unabhängig voneinander ausgewählt sind aus - (C₁-C₈)Alkyl, -O-(C₁-C₈)Alkyl, -OCO-(C₁-C₈)Alkyl, -O-Phenyl, -Phenyl, -(C₆-C₁₄) Aryl, einem Halogenatom, -OH, -NO₂, -Si((C₁-C₈)Alkyl)₃, -CF₃, -CN, -COOH, -CHO, -SO₃H, -NH₂, -NH-(C₁-C₈)Alkyl, -N-((C₁-C₈)Alkyl)₂, -P((C₁-C₈)Alkyl)₂, -SO₃-(C₁-C₄)Alkyl, -SO₂-(C₁-C₆)Alkyl, -SO-(C₁-C₆)Alkyl, -CF₃, -NHCO-(C₁-C₄)Alkyl, -COO-(C₁-C₈)Alkyl, -CONH₂, -CO-(C₁-C₈)Alkyl, -NHCOH, -NHCOO-(C₁-C₄)Alkyl, -CO-Phenyl, -COO-Phenyl, -COO-(C₆ C₁₀)Aryl, -CO-(C₆-C₁₀)Aryl, -CH=CH-CO₂-(C₁-C₈)Alkyl, -CH=CHCO₂H, -P(Phenyl)₂, -P((C₁-C₈)Alkyl)₂, -PO(Phenyl)₂, -PO((C₁-C₄)Alkyl)₂, -PO₃H₂ und -PO(O-(C₁-C₆)Alkyl)₂

Bevorzugt kann ein Heteroarylrest 1, 2, 3, 4 oder 5 gleiche oder verschiedene Substituenten tragen. An den Heteroarylrest können auch weitere aromatische, heteroaromatische oder/und aliphatische Ringe ankondensiert sein.

Als Halogenatome finden im Rahmen der vorliegenden Erfindung bevorzugt Ghlor-oder Fluoratome Verwendung.

Bevorzugt als Reste R¹ und R² sind ein Alkylrest, einschließlich eines Cycloalkylrestes, gegebenenfalls substituiert mit einem oder mehreren Substituenten, ausgewählt aus -O-(C₁-C₈)Alkyl-, -O-CO-(C₁-C₈)Alkyl, -OPhenyl, -Phenyl, -Cl, -F, -OH, -CN, -COOH, -N((C₁-C₈)Alkyl)₂, -CF₃, und -COO-(C₁-C₈)Alkyl, ein Arylrest, gegebenenfalls substituiert mit einem oder mehreren Substituenten, ausgewählt aus -(C₁-C₈)Alkyl, -O-(C₁-C₈)Alkyl, -OCO-(C₁-C₈)Alkyl, -(C₆-C₁₄)Aryl, -Cl, -F, -OH, -CF₃, -CN, -COOH, -N((C₁-C₈)Alkyl)₂, - COO-(C₁-C₈)Alkyl, -P(Phenyl)₂, und -P((C₁-C₈)Alkyl)₂, und ein Heteroarylrest, gegebenenfalls substituiert mit einem oder mehreren Substituenten, ausgewählt aus -(C₁-C₈)Alkyl, -O-(C₁-C₈)Alkyl, -OCO-(C₁-C₈)Alkyl, -(C₆-C₁₄)Aryl, -Cl, -F, - OH, -CF₃, -CN, -COOH, -N((C₁-C₈)Alkyl)₂, -COO-(C₁-C₈)Alkyl, -P(Phenyl)₂, und -P((C₁-C₈)Alkyl)₂.

Besonders bevorzugt sind als Reste R¹ und R² ein Alkylrest, einschließlich eines Cycloalkylrestes, gegebenenfalls substituiert mit einer oder mehreren Phenylgruppen und ein Arylrest, gegebenenfalls substituiert mit einem oder mehreren Alkylresten.

Weiter bevorzugt sind als Reste R¹ und R² sterisch anspruchsvolle Substituenten, wie Cycloalkylreste oder Arylreste, wobei als Arylreste besonders bevorzugt Phenylreste verwendet werden, die einen, zwei oder drei Substituenten z.B. in ortho- und oder para-Stellung tragen. Insbesondere bevorzugt als Reste R¹ und R² sind 2,4,6-Trimethylphenyl-, 2,6-Dimethylphenyl-, 1-Adamantyl-, tert-Butyl-, Cyclohexyl, o-Tolyl, 2,6-Diisopropyl-4-methylphenyl, und 2,6-Diisopropylphenylgruppen.

Bevorzugte Reste R³ bis R⁶ werden unabhängig voneinander ausgewählt aus einem Wasserstoffatom, -F, -Cl, -CN, -COOH, -SO₃H, -NH-(C₁-C₈)Alkyl, -N((C₁-C₈)Alkyl)₂, -NHCO-(C₁-C₄)Alkyl, -CF₃, -COO-(C₁-C₈)Alkyl, -CO-(C₁-C₈)Alkyl-, -PO(Phenyl)₂, -PO((C₁-C₈)Alkyl)₂, einem gegebenenfalls substituierten (C₁-C₈)-Alkylrest, einem gegebenenfalls substituierten (C₆-C₁₄)-Arylrest, und einem gegebenenfalls substituierten fünf-, sechs- oder siebengliedrigen Hetereoarylrest, oder mindestens zwei der Reste R³ bis R⁶ bilden zusammen mit den Kohlenstoffatomen, an die sie gebunden sind, einen 4-12-gliedrigen, bevorzugt einen fünf- sechs- oder siebengliedrigen Ring. Besonders bevorzugt sind als Reste R³ bis R⁶ ein Wasserstoffatom und/oder ein Alkylrest, insbesondere eine Methyl- oder Ethylgruppe. Beispielsweise können im Falle einer besonders bevorzugten Ausführungsform des Carbenliganden der Formel (II) R³ und R⁴ identisch sein und Wasserstoffatome oder Alkylreste darstellen. Im Falle einer besonders bevorzugten Ausführungsform des Carbenliganden der Formel (III) bilden jeweils R⁴ und R⁵ bzw. R³ und R⁶ identische Paare, unabhängig voneinander ausgewählt aus Wasserstoffatomen und Alkylresten.

Im Fall der Reste R³ bis R⁶ werden besonders bevorzugte Substituenten des Alkylrests ausgewählt aus -O-(C₁-C₈)-Alkyl, -O-CO-(C₁-C₈)-Alkyl-(C₁-C₈),-OPhenyl, -Phenyl, -F, -Cl, -OH, -CN, -COOH, -CHO, -SO₃H, -NH₂, -NH-(C₁-C₈)Alkyl, -N((C₁-C₈)Alkyl)₂, -NHCO-(C₁-C₄)Alkyl, -CF₃, -COO-(C₁-C₈)Alkyl,-NHCOH, -NHCOO-(C₁-C₄)Alkyl, -CO-Phenyl, -COO-Phenyl, -PO(Phenyl)₂, und -PO((C₁-C₈)Alkyl)₂. Besonders bevorzugte Substituenten des Arylrests werden ausgewählt aus -(C₁-C₈)Alkyl, -O-(C₁-C₈)Alkyl, -(C₆-C₁₀)Aryl, -OCO-(C₁-C₈)Alkyl, -O-Phenyl, -Phenyl, -F, -Cl, -OH, -CF₃, -CN, -COOH, -SO₃H, -NH₂, -NH-(C₁-C₈)Alkyl, -N((C₁-C₈)Alkyl)₂, -NHCO-(C₁-C₄)Alkyl, -COO-(C₁-C₈)Alkyl, -CONH₂, -CO-(C₁-C₈)Alkyl, -NHCOH, -NHCOO-(C₁-C₄)Alkyl, -CO-Phenyl, -COO-Phenyl, -COO-(C₆-C₁₀)Aryl, -CO-(C₆-C₁₀)Aryl, -P(Phenyl)₂, -P((C₁-C₈)Alkyl)₂, -PO(Phenyl)₂, -PO((C₁-C₄)Alkyl)₂, -PO₃H₂, und -PO(-O-(C₁-C₆)-Alkyl)₂, Besonders bevorzugte Substituenten des Heteroarylrests werden unabhängig voneinander ausgewählt aus -(C₁-C₈)Alkyl, -O-(C₁-C₈)Alkyl, -OCO-(C₁-C₈)Alkyl, -O-Phenyl, -Phenyl, -F, -Cl, -OH, -CF₃, -CN, -COOH, -SO₃H, -NH₂, -NH-(C₁-C₈)Alkyl, -N((C₁-C₈)Alkyl)₂, -NHCO-(C₁-C₄)Alkyl, -COO-(C₁-C₈)Alkyl, -CONH₂, -CO-(C₁-C₈)Alkyl, -NHCOH, -NHCOO-(C₁-C₄)Alkyl, =COO-(C₆-C₁₀)Aryl, -CO-(C₆-C₁₀)Aryl, -P(Phenyl)₂, -P((C₁-C₈)Alkyl)₂, -PO(Phenyl)₂, -PO((C₁-C₄)Alkyl)₂, -PO₃H₂, und -PO(-O-(C₁-C₆)-Alkyl)₂.

Als Liganden L² sind folgende Carbene besonders bevorzugt: 1,3-Bis-(2,4,6-trimethylphenyl)-imidazolin-yliden, 1,3-Bis-(2,6-dimethylphenyl)-imidazolin-yliden, 1,3-Bis-(1-adamantyl)-imidazolin-yliden, 1,3-Bis-(tert-butyl)-imidazolin-yliden, 1,3-Bis-(cyclohexyl)-imidazolin-yliden, 1,3-Bis-(o-tolyl)-imidazolin-yliden, 1,3-Bis-(2,6-düsopropyl-4-methylphenyl)-imidazolin-yliden und 1,3-Bis-(2,6-diisopropyl phenyl)-imidazolin-yliden, 1,3-Bis-(2,4,6-trimethylphenyl)-4,5-dihydroimidazolin-yliden, 1,3-Bis-(2,6-dimethylphenyl)- 4,5-dihydro imidazolin-yliden, 1,3-Bis-(1-adamantyl)- 4,5-dihydro imidazolin-yliden, 1,3-Bis-(tert-butyl)-4,5-dihydro imidazolin-yliden, 1,3-Bis-(cyclohexyl)- 4,5-dihydro imidazolin-yliden, 1,3-Bis-(o-tolyl)- 4,5-dihydro imidazolin-yliden, 1,3-Bis-(2,6-düsopropyl-4-methylphenyl)- 4,5-dihydro imidazolin-yliden und 1,3-Bis-(2,6-diisopropylphenyl)- 4,5-dihydro imidazolin-yliden.

Als Zentralmetall ist in den erfindungsgemäßen Komplexen ein Metall der Oxidationsstufe 0 bevorzugt. Insbesondere ist Palladium bevorzugt.

Als Ligand mit mindestens einer elektronenarmen olefinischen Doppelbindung L¹ kommen elektronenarme Olefine zum Einsatz, die an der Doppelbindung elektronenziehende Substituenten tragen. Allgemein eignen sich hierfür Substituenten, deren Elektronegativität größer als die eines Wasserstoffsubstituenten ist. Verbindungen der Formel L¹ können an der Doppelbindung einen, zwei, drei oder vier dieser elektronenziehenden Substituenten tragen. Bevorzugt werden als elektronenziehende Substituenten Cyanogruppen oder Carbonylreste, wie z.B. Aldehydgruppen, Ketylreste, Carbonsäuregruppen, Carbonsäureesterreste, Carbonsäureamidreste, oder N-substituierte Carbonsäureamidreste, verwendet.

Verbindungen der Formel L¹ können eine oder mehrere, bevorzugt eine oder zwei elektronenarme olefinische Doppelbindungen aufweisen. Besonders bevorzugt sind solche Verbindungen, die neben der oder den elektronenarmen olefinischen Doppelbindungen keine weiteren olefinischen Doppelbindungen enthalten.

Insbesondere bevorzugt sind Verbindungen, die mit genau einer elektronenarmen Doppelbindung am zentralen Metallatom koordinieren. Dabei kann es sich zum Beispiel um Verbindungen handeln, die genau eine Doppelbindung aufweisen, oder aber um Verbindungen deren Struktur, z.B. aufgrund sterischer oder konformativer Hinderung, keine gleichzeitige Koordination von mehr als einer Doppelbindung am gleichen Metallatom erlaubt. Letzteres ist z.B. bei Chinonen der Fall, bei denen es sich damit um eine bevorzugte Ausführungsform der Liganden L¹ handelt.

Besonders bevorzugte Liganden L¹ im Rahmen der vorliegenden Erfindung werden durch die nachfolgenden Formeln (IV), (V) und (VI) dargestellt.

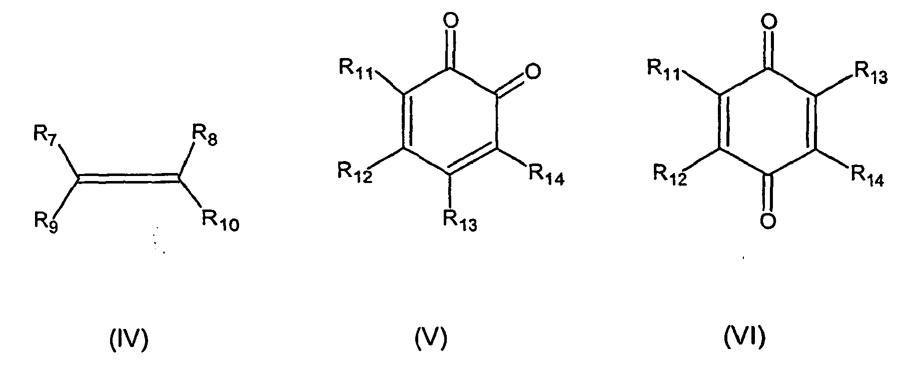

In Formel (IV) ist R⁷ ausgewählt aus -CN, -COH, -COR¹⁵, -COOH, -COOR¹⁵, -CONHR¹⁵, und -CONR¹⁵R¹⁶, wobei R¹⁵ und R¹⁶ unabhängig voneinander ein Wasserstoffatom, einen C₁-C₈ Alkylrest oder C₂-C₈ Alkenylrest darstellen und R⁸, R⁹ und R¹⁰ sind unabhängig voneinander ausgewählt aus einem Wasserstoffatom, einem C₁-C₈ Alkylrest, einem C₂-C₈ Alkenylrest, einem Halogenatom, einer Hydroxylgruppe, -CN, -COH, -COR¹⁵, -COOH, -COOR¹⁵, -CONHR¹⁵, und CONR¹⁵R¹⁶, wobei R¹⁵ und R¹⁶ wie vorstehend definiert sind. Gegebenenfalls können zwei geeignete Reste R⁷, R⁸, R⁹, R¹⁰, R¹⁵ und R¹⁶ z.B. durch Kondensation von darin enthaltenen funktionellen Gruppen oder Ersetzen eines oder mehrerer endständiger Atome durch Einfach- oder Doppelbindungen zusammen mit den Atomen, an die sie gebunden sind, einen 5- bis 8-gliedrigen, bevorzugt 5- oder 6-gliedrigen Ring bilden, der vorzugsweise aromatisch oder teilweise hydriert sein kann.

Bevorzugte Reste R¹⁵ und R¹⁶ sind ausgewählt aus einem Wasserstoffatom, oder einem Alkylrest. Der Alkylrest weist 1 bis 8, bevorzugt 1 bis 6, besonders bevorzugt 1 bis 4 C-Atome auf.

In den Formeln (V) und (VI) stellen R¹¹, R¹², R¹³ und R¹⁴ unabhängig voneinander ein Wasserstoffatom, einen C₁-C₈ Alkylrest, ein Halogenatom oder -CN dar, oder jeweils zwei der Substituenten R¹¹ bis R¹⁴ bilden zusammen mit den Atomen, an die sie gebunden sind, einen 5 bis 8-gliedrigen, bevorzugt 5- oder 6-gliedrigen Ring, der vorzugsweise aromatisch oder teilweise hydriert sein kann.

Bevorzugt als Reste R¹¹, R¹², R¹³ und R¹⁴ sind Wasserstoffatome und Alkylreste. Ein Alkylrest weist 1 bis 8, bevorzugt 1 bis 6, besonders bevorzugt 1 bis 4 C-Atome auf. Besonders bevorzugt ist dabei der Fall, dass zumindest R¹¹ und R¹² Wasserstoffatome darstellen, wobei R¹³ und R¹⁴ ebenfalls Wasserstoffatome oder Alkylreste darstellen oder einen 6-gliedrigen aromatischen Ring bilden.

Besonders bevorzugte Liganden L¹ sind Acrylsäure, Acrylsäureester, Acrylnitril, Methacrylsäure, Methacrylsäureester, Methacrylnitril, Benzochinon, 2-Methyl-p-benzochinon, 2,5-Dimethyl-p-benzochinon, 2,3-Dichlor-5,6-dicyano-p-benzochinon, Naphthochinon, Anthrachinon, Maleinsäureanhydrid, Maleinsäureimid, Maleinsäure, Maleinsäureester, Fumarsäure, Fumarsäureester, Metallsalze der genannten Carbonsäuren oder Tetracyanoethen zur Anwendung.

Neben Komplexen der Formel (1) sind auch Dimere dieser Komplexe, die über eine zusätzliche Funktionalität des Liganden L¹ verknüpft sind, Gegenstand der vorliegenden Erfindung. Sie weisen die folgende Struktur (la) und (1b) auf

L²-M-L¹-M-L² (Ia)

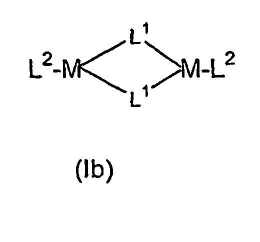

wobei L¹, L² und M unabhängig voneinander wie vorstehend definiert sind, mit der Maßgabe, dass der verbrückenden Rest L¹ in Formel (la) bzw. (1b) so ausgewählt ist, dass er eine weitere Koordinationsstelle für ein Ni, Pt oder Pd-Atom aufweist, z.B. einen Carbonylsauerstoff oder eine weitere elektronenarme olefinische Doppelbindung. Das Dimer der Formel (1b) scheint sich bevorzugt in kristallinen Formen auszubilden, während der Komplex der Formel (1) bevorzugt in Lösungen zu finden ist.

Ein weiterer Gegenstand der Erfindung ist ein Verfahren zur Herstellung der neuen Katalysatorkomplexe durch Reaktion eines Carbens oder seiner Vorstufe mit geeigneten Nickel-, Palladium- oder Platin-Komplexen. Geeignete Komplexe sind solche, deren Liganden leicht durch Carbene verdrängt werden können, z.B. Olefinkomplexe wie Ni(Cyclooctadien)₂, Pd₂(Diallylether)₃, Alkin- oder Amin-Komplexe (PdMe₂(N,N,N',N'-Tetramethylethylendiamin)). Als Edukte bevorzugt sind solche Komplexe, die (a) ein geeignetes elektronenarmes Olefin L¹ als Liganden an einem Nickel-, Palladium- oder Platinatom und (b) einen weiteren Liganden enthalten, der leicht durch ein Carben verdrängt werden kann. Beispiele für einen solchen Liganden, der bei der Synthese des Komplexes durch das Carben ersetzt wird, sind Cyclooctadien oder Norbomadien, so dass als Edukt- oder Precursorkomplex z.B. (Cyclooctadien)Pd(Benzochinon) oder (Norbornadien)Pd(Maleinsäureanhydrid)) eingesetzt wird. Der Teil der Eduktkomplexe, der sich aus dem Zentralatom und dem Liganden mit elektronenarmer Doppelbindung zusammensetzt und der auch im erfindungsgemäßen Carbenkomplex noch vorhanden ist, wird im folgenden auch als Fragment L¹-M bezeichnet. Als Vorstufen von Carbenen können beispielsweise die Imidazoliumsalze in Gegenwart von Basen eingesetzt werden.

Der erfindungsgemäße Katalysator kann auch in situ aus einem geeigneten Precursor, wie oben beschrieben und dem Carbenliganden L² hergestellt werden. Dazu werden beide Komponenten dem Reaktandengemisch der zu katalysierenden Reaktion zugegeben. Eine solche Vorgehensweise ist jedoch nicht bevorzugt, da hier die eigentlich aktive Katalysatorspezies erst gebildet werden muss, d. h. der Katalysator muss präformiert werden, um eine maximale Aktivität zu erreichen. Da optimale Präformierungsbedingungen und optimale Reaktionsbedingungen für die Katalysereaktion häufig nicht identisch sind, wird das Katalysatormetall nicht immer optimal genutzt. Es ist daher vorteilhaft, die erfindungsgemäßen Komplexe unter kontrollierten Bedingungen herzustellen und zu isolieren und sie erst anschließend als Katalysatoren zu verwenden. Dabei wird bevorzugt das Carben bei reduzierter Temperatur (z.B. bei einer Temperatur von -78 bis +30°C, vorzugsweise bei -10°C bis +28°C) mit einer Lösung des Eduktkomplexes umgesetzt, der das Fragment L¹-M enthält. Als Lösungsmittel eignet sich beispielsweise THF. Das entstehende Produkt kann beispielsweise durch Einengen der Lösung und Ausfällen isoliert werden. Es kann darüber hinaus mit gebräuchlichen Verfahren wie Waschen, Umkristallisieren oder Umfällen gereinigt werden.

Die neuen Komplexe werden erfindungsgemäß als Katalysatoren für organische Reaktionen eingesetzt. Typische, aber nicht einschränkende Beispiele für derartige katalytische Reaktionen sind Olefinierungen, Arylierungen, Alkylierungen, Ketonarylierungen, Aminierungen, Etherifizierungen, Thiolisierungen, Silylierungen, Carbonylierungen, Cyanierungen, Alkinylierungen von Aryl-X-Verbindungen, Vinyl-X-Verbindungen, wobei X eine Abgangsgruppe darstellt, beispielsweise ein Halogenid, ein Diazoniumsalz, Triflat, Trifluormethansulfonat, oder olefinischen Verbindungen, auch in Gegenwart von Nukleophilen. Weitere Beispiele geeigneter Reaktionen sind Hydrosilylierungen von Olefinen oder Alkinen oder Ketonen, Carbonylierungen von Olefinen, Di- und Oligomerisierungen von Olefinen, Telomerisationen von Dienen, Kreuzkupplungen mit metallorganischen Reagenzien (z.B. Grignardreagenzien, Lithiumreagenzien, Zinkreagenzien, Zinnreagenzien etc.) und andere übergangsmetallkatalysierte Kupplungsreaktionen. Insbesondere haben sich die erfindungsgemäß hergestellten Komplexe als Katalysatoren zur Herstellung von arylierten Olefinen (Heck-Reaktionen), Biarylen (Suzuki-Reaktionen), Carbonsäuren und Aminen aus Aryl- oder Vinylhalogeniden oder anderen Aryl-X-Verbindungen, wie z.B. Aryldiazoniumsalzen, bewährt.

Beispielhaft zeigt sich die hohe Aktivität der erfindungsgemäßen Komplexe bei der Aktivierung von kostengünstigen, jedoch reaktionsträgen Chloraromaten.

Im allgemeinen wird der erfindungsgemäße Katalysator direkt ohne weitere Ligandenzusätze verwendet. In diesem Fall werden bei der Herstellung des Katalysators vorteilhafterweise stöchiometrisch entsprechende Mengen von L¹, L² und M eingesetzt. Es ist jedoch auch möglich bei katalytischen Anwendungen einen, vorzugsweise geringen, Überschuss eines Liganden zum Übergangsmetall einzusetzen.

Generell ist es üblich, die erfindungsgemäßen Katalysatoren aufgrund Ihrer Aktivität in sehr niedrigen Übergangsmetallkonzentrationen (< 2 Mol-%) zu verwenden. Bevorzugt werden bei katalytischen Anwendungen Übergangsmetallkonzentrationen zwischen 1,5 und 0.0001 Mol%, insbesondere zwischen 1 und 0,01 Mol%, Übergangsmetall eingesetzt.

Die neuen Nickel-, Palladium- und Platin-Komplexe sind thermisch sehr stabil. So können die erfindungsgemäßen Katalysatoren bei Reaktionstemperaturen bis über 250°C verwendet werden. Vorzugsweise werden die Katalysatoren bei Temperaturen von -20 bis 200 °C eingesetzt; in vielen Fällen hat es sich bewährt, bei Temperaturen von 30 bis 180 °C, bevorzugt 40 bis 160 °C, zu arbeiten. Die Komplexe können ohne Verlust an Aktivität auch bei Druckreaktionen verwendet werden, wobei üblicherweise nur bis zu einem Druck von 100 bar gearbeitet wird, vorzugsweise jedoch im Bereich des Normaldrucks bis zu 60 bar. Besonders überraschend ist die Stabilität der erfindungsgemäßen Komplexen, da es sich bei den Metallkomplexen um unterkoordinierte Spezies handelt.

Die erfindungsgemäß hergestellten Katalysatoren können u. a. für die Herstellung von Arylolefinen, Dienen, Biarylen, Benzoesäurederivaten, Acrylsäurederivaten, Arylalkanen, Alkinen, Aminen , Ethern, Thioethern und Silylverbindungen eingesetzt werden. Die so hergestellten Verbindungen können unter anderem eingesetzt werden als UV-Absorber, als Zwischenprodukte für Pharmazeutika und Agrochemikalien, als Ligandvorstufen für Metallocenkatalysatoren, als Riechstoffe, Wirkstoffe und Bausteine für Polymere.

### Beispiele

Allgemeine Vorschrift zur Synthese der erfindungsgemäßen Komplexe:

1 mmol eines Ni-, Pd- oder Pt-Komplexes mit Olefin-Fragment wird in 50 ml absolutem THF suspendiert. Die Herstellung geeigneter Eduktkomplexe wird beispielsweise in M.Hiramatsu et al., J. Organomet. Chem. 246 (1983) 203 aufgezeigt, wo insbesondere die Synthese von (Cyclooktadien)Pd(Chinon)-Komplexen beschrieben ist.
Es wird bei -78 °C langsam eine Lösung von 1 mmol Carben in 20 ml absolutem THF zugetropft. Man läßt die Mischung langsam auf Raumtemperatur erwärmen und rührt noch 2 Stunden nach. Die Lösung wird im Vakuum bis zu einem Volumen von ca. 2 ml eingeengt und schließlich mit 25 ml absolutem Ether versetzt. Der ausgefallene Feststoff wird abfiltriert, mit Ether gewaschen und getrocknet. Man erhält den entsprechenden Carben-Metall-Olefin-Komplex in analysenreiner Form.

Unter entsprechender Anpassung dieser Vorschrift wurden folgende Komplexe hergestellt:

### Beispiele 1 bis 14

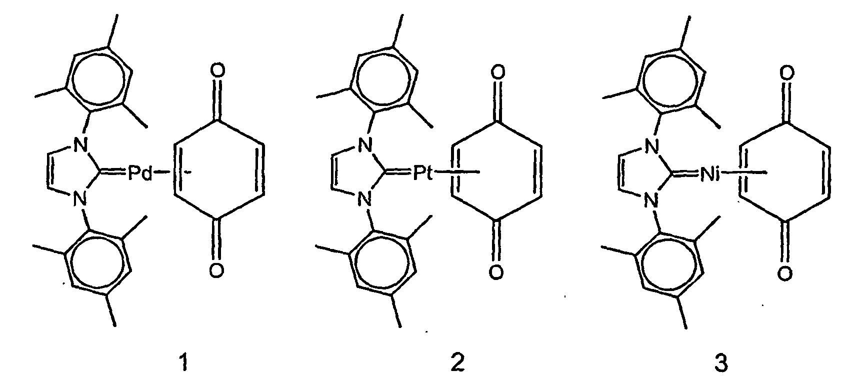

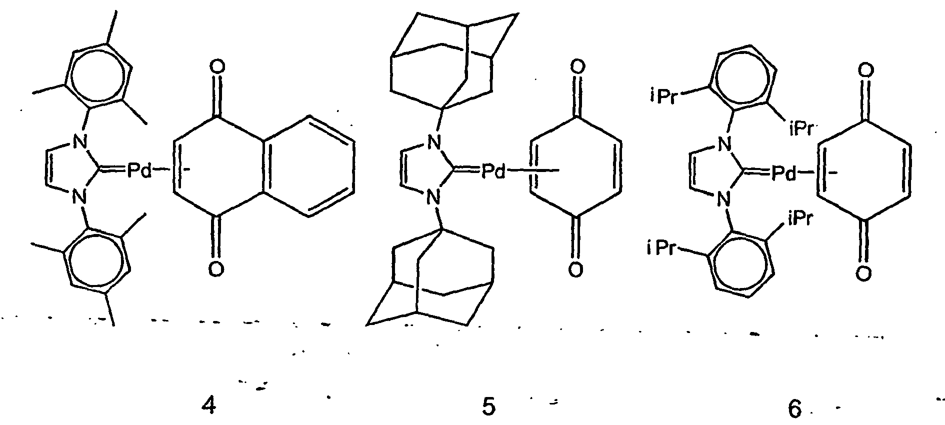

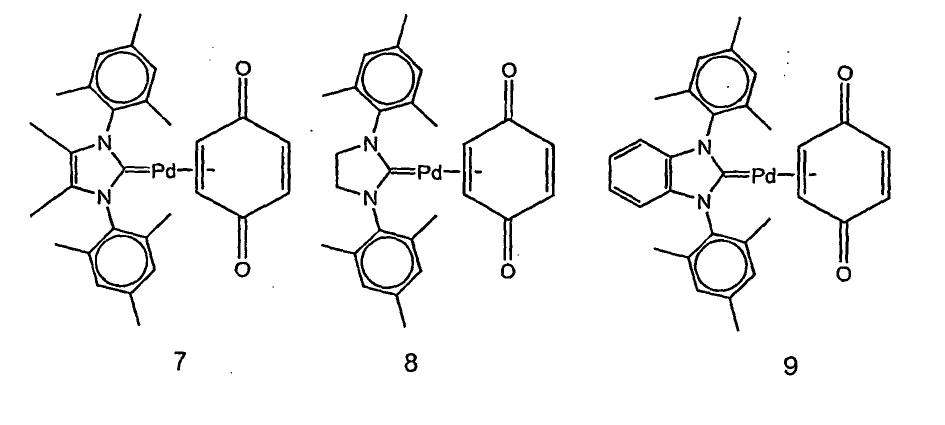

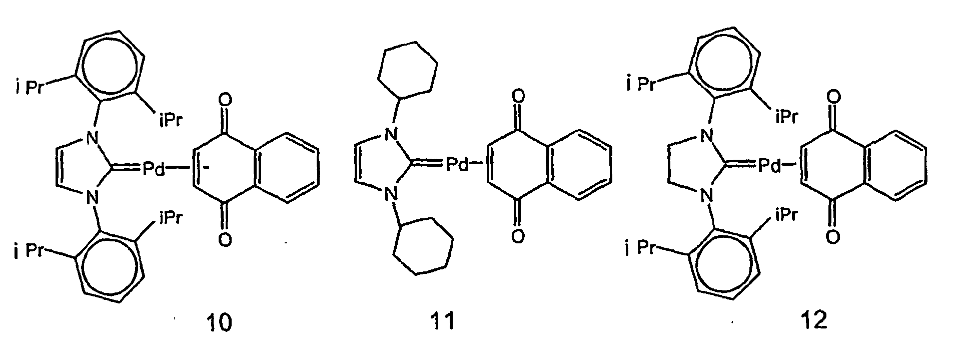

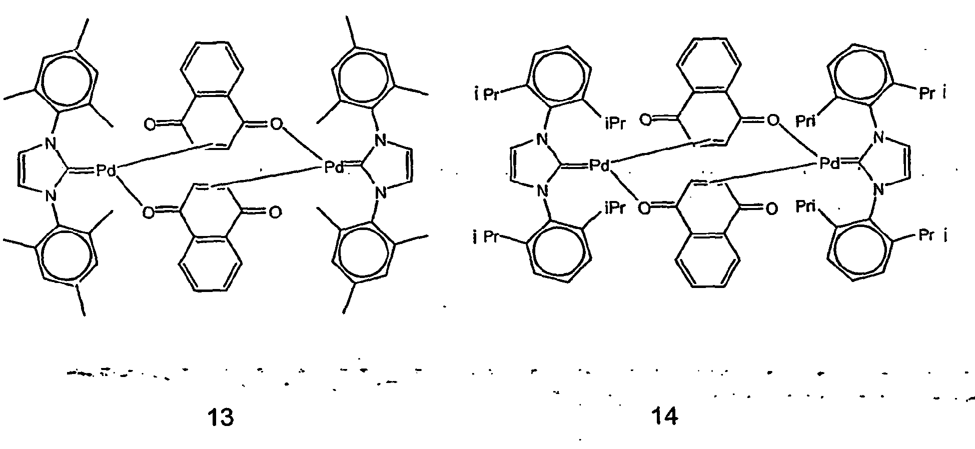

### Synthese von (IMes)Pd(BQ) 1

(BQ)Pd(COD) (323 mg, 1.0 mmol) wurde unter einer Argonatmosphäre in THF (50 ml) suspendiert und in einem Aceton-Trockeneisbad auf -78°C gekühlt. 1,3-Dimesitylimidazol-2-ylidene (304 mg, 1.0 mmol) gelöst in THF (20 ml) wurde langsam mit einer Spritze unter Rühren zugegeben. Das Rühren wurde bei -78°C für 2 h fortgesetzt. Das Aceton-Trockeneisbad ließ man langsam auf Raumtemperatur erwärmen. Die dunkelbraune Lösung wurde bei Raumtemperatur weiter 2 h lang gerührt. Die Lösung wurde gefiltert (D-4 Fritte) und unter Vakuum auf 5 ml eingedampft. Getrockneter Ether (20 ml) wurde langsam als Schicht zugegeben. Die dunkelbraunen feinen Kristalle, die sich gebildet hatten, wurden abgetrennt und mit Ether gewaschen und unter Vakuum getrocknet. Ausbeute = 440 mg, 85 %.
Analyse berechnet für C₂₇H₂₈N₂O₂Pd (518.95): C, 62.49; H, 5.44; N, 5.39.
Gefunden: C, 62.75; H, 5.42; N, 5.30.

### Synthesis von (IMes)Pd(NQ) 4

(NQ)Pd(COD) (373 mg, 1.0 mmol) wurde unter Argonatmosphäre in THF (50 ml) suspendiert und in einem Aceton-Trockeneisbad auf -78°C gekühlt. 1,3-Dimesitylimidazol-2-ylidene (304 mg, 1.0 mmol) gelöst in THF (20 ml) wurde langsam mit einer Spritze unter Rühren zugegeben. Es bildet sich sofort eine rötliche Lösung. Die Lösung wurde bei -78 °C für 2h gerührt. Das Aceton-Trockeneisbad ließ man langsam auf Raumtemperatur erwärmen. Die dunkelrote Lösung wurde bei Raumtemperatur weiter 2h lang gerührt. Die Lösung wurde gefiltert (D-4 Fritte) und unter Vakuum auf 5ml eingedampft. Getrockneter Ether (25 ml) wurde langsam als Schicht zugegeben. Rote Kristalle, die sich gebildet hatten wurden langsam getrennt und mit Ether gewaschen und unter Vakuum getrocknet. Ausbeute = 480 mg, 84 %.
Analyse berechnet für C₃₁H₃₀N₂O₂Pd (569.01): C, 65.44; H, 5.31; N, 4.92.
Gefunden: C, 65.79; H, 5.48; N, 4.80.

Allgemeine Arbeitsvorschrift zur Heck-Reaktion von Arylhalogeniden:

In einem Druckrohr (erhältlich z.B. bei Fa. Aldrich) wurden unter einer Argon-Atmosphäre 1 mmol Arylhalogenid, 1.5 mmol Olefin, 1.2 mmol Base, eine geeignete Menge des erfindungsgemäßen Komplexes (1 mol%) sowie 100 mg Diethylenglycoldi-*n*-butylether (als interner Standard für die GC-Analytik) zu 2 g einer ionischen Flüssigkeit bzw. 5 ml Dioxan gegeben. Das Rohr wurde verschlossen und in ein vorgeheiztes Siliconölbad gehängt. Nach 24 h ließ man es auf Raumtemperatur abkühlen. Die Mischung wurde in Ether suspendiert, und die überstehende Lösung wurde gaschromatographisch analysiert. Die Produkte können durch Destillation oder säulenchromatographisch (Kieselgel, Hexan/Ethylacetat-Mischungen) isoliert werden.

### Beispiele 15 bis 31

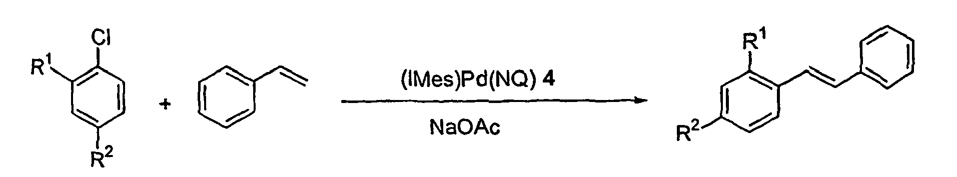

"IMes" bedeutet 1,3-Bis-(2,4,6-Trimethylphenyl)-imidazolin-yliden und "NQ" bedeutet Naphthochinon.

| Nr. | R¹ | | R² | LM | Temp. (°C) | Umsatz (%) | Ausbeute (%) |
|---|---|---|---|---|---|---|---|
| 15 | H | | H | Bu₄NBr | 140 | 71 | 62 |
| 16 | H | | H | Bu₄NBr | 160 | 83 | 67 |
| 17 | H | | OCH₃ | Bu₄NBr | 160 | 63 | 52 |
| 18 | H | | NO₂ | Bu₄NBr | 140 | 100 | 88 |
| 19 | H | | Me | Bu₄NBr | 160 | 65 | 62 |
| 20 | H | | CF₃ | Bu₄NBr | 140 | 93 | 84 |
| 21 | CN | | H | Bu₄NBr | 140 | 100 | 99 |
| 22 | 1.1. | H | COCH₃ | Bu₄NBr | 140 | 100 | 97 |
| 23 | 1.2. | H | COCH₃ | Et₄NBr | 140 | 100 | 95 |
| 24 | 1.3. | H | COCH₃ | Dioxan | 140 | 100 | 98 |
| 25 | 1.4. | H | CF₃ | Dioxan | 140 | 95 | 89 |
| 26 | 1.5. | H | OCH₃ | Dioxan | 160 | 65 | 59 |
| 27 | 1.6. | F | H | Dioxan | 160 | 87 | 82 |

| | | | | | | | |
|---|---|---|---|---|---|---|---|
| LM = Lösungsmittel | | | | | | | |

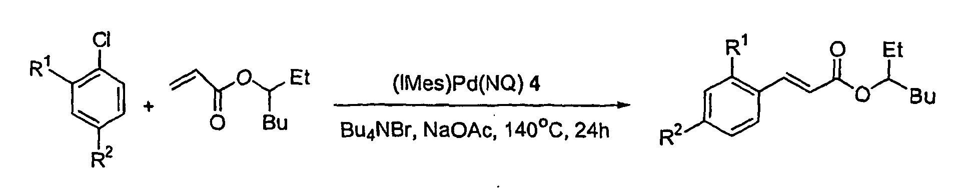

| Nr. | R¹ | R² | Umsatz (%) | Ausbeute (%) |
|---|---|---|---|---|
| 28 | CN | H | 100 | 99 |
| 29 | H | NO₂ | 100 | 98 |
| 30 | H | COCH₃ | 100 | 99 |
| 31 | H | CF₃ | 98 | 90 |

Allgemeine Arbeitsvorschrift zur Heck-Reaktion von Aryldiazoniumsalzen:

Unter einer Argon-Atmosphäre wurden 1 mmol Aryldiazoniumsalz, 1.5 mmol Olefin, eine geeignete Menge an Carben-Pd-Olefin-Katalysator (1 mol%) sowie 100 mg Diethylenglycoldi-*n*-butylether (als interner Standard für die GC-Analyttk) Zu 5 ml Ethanol gegeben. Die Mischung wurde 1 Stunde auf eine geeignete Temperatur erwärmt und anschließend bei Raumtemperatur mit Ether versetzt. Die Lösung wurde gaschromatographisch analysiert. Die Produkte können durch Destillation oder säulenchromatographisch (Kieselgel, Hexan/Ethylacetat-Mischungen) isoliert werden.

### Beispiele 32 bis 36

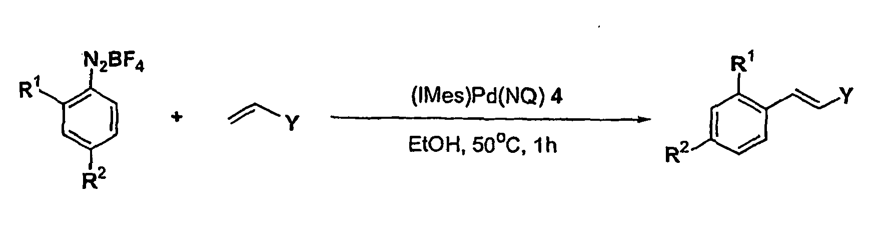

| Nr. | R¹ | R² | 1.7. Y | Ausbeute (%) |
|---|---|---|---|---|
| 32 | H | OMe | Ph | 68 |
| 33 | H | OMe | CO₂Et | 90 |
| 34 | H | OMe | CO₂CH₂CH(Et)(CH₂)₃CH₃ | 88 |
| 35 | H | NEt₂ | CO₂CH₂CH(Et)(CH₂)₃CH₃ | 99 |
| 36 | H | NO₂ | CO₂CH₂CH(Et)(CH₂)₃CH₃ | 96 |

Allgemeine Arbeitsvorschrift zur Suzuki-Reaktion von Arylhalogeniden:

In einem Druckrohr (erhältlich z.B. bei Fa. Aldrich) wurden unter einer Argon-Atmosphäre 1 mmol Arylhalogenid, 1.5 mmol Arylboronsäure, 1.5 mmol Base, eine geeignete Menge an Carben-Pd-Olefin-Katalysator (1 mol%) sowie 100 mg Diethylenglycoldi-*n*-butylether (als interner Standard für die GC-Analytik) zu 5 ml Xylol gegeben. Das Rohr wurde verschlossen und in ein vorgeheiztes Siliconölbad gehängt. Nach-20 h ließ man es auf Raumtemperatur abkühlen. Die Mischung wurde in Ether suspendiert, und die überstehende Lösung wurde gaschromatographisch analysiert. Die Produkte können durch Destillation oder säulenchromatographisch (Kieselgel, Hexan/Ethylacetat-Mischungen) isoliert werden.

### Beispiele 37 bis 43

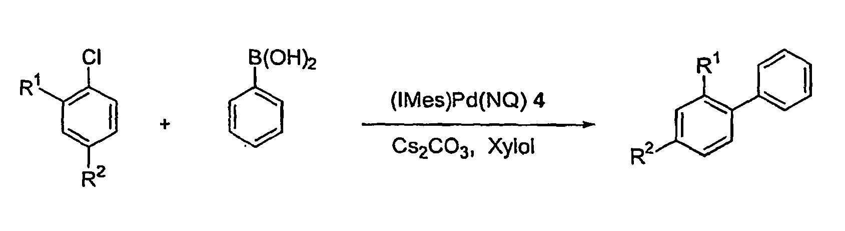

| Nr. | R¹ | R² | Temp (°C) | Umsatz (%) | Ausbeute (%) |
|---|---|---|---|---|---|
| 37 | CN | H | 100 | 100 | 98 |
| 38 | H | NO₂ | 100 | 100 | 87 |
| 39 | H | COCH₃ | 100 | 94 | 88 |
| 40 | H | CF₃ | 100 | 89 | 86 |
| 41 | H | H | 120 | 86 | 78 |
| 42 | H | CH₃ | 120 | 91 | 84 |
| 43 | H | OCH₃ | 120 | 73 | 69 |

Allgemeine Arbeitsvorschrift zur Suzuki-Reaktion von Aryldiazoniumsalzen:

Unter einer Argon-Atmosphäre wurden 1 mmol Aryldiazoniumsalz, 1.2 mmol Arylboronsäure, eine geeignete Menge an Carben-Pd-Olefin-Katalysator (1 mol%) sowie 100 mg Diethylenglycoldi-*n*-butylether (als interner Standard für die GC-Analytik) zu 5 ml Ethanol gegeben. Die Mischung wurde 1 Stunde auf eine geeignete Temperatur erwärmt und anschließend bei Raumtemperatur mit Ether versetzt. Die Lösung wurde gaschromatographisch analysiert. Die Produkte können durch Destillation oder säulenchromatographisch (Kieselgel, Hexan/Ethylacetat-Mischungen) isoliert werden.

### Beispiele 44 bis 48

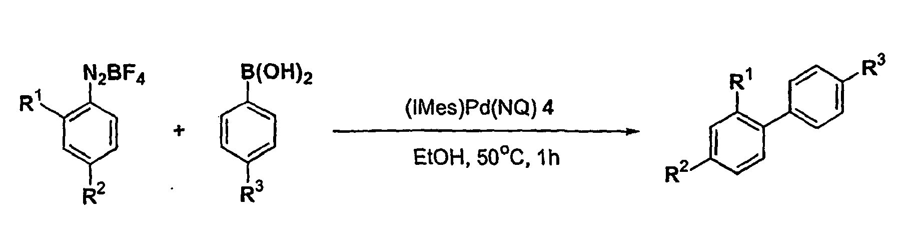

| Nr. | R¹ | R² | R³ | Ausbeute (%) |
|---|---|---|---|---|
| 44 | H | OMe | H | 93 |
| 45 | H | OMe | CF₃ | 96 |
| 46 | H | NEt₂ | H | 95 |
| 47 | H | NEt₂ | CH₃ | 89 |
| 48 | H | NO₂ | H | 94 |

Allgemeine Arbeitsvorschrift zur Keton-Arylierung:

In einem Druckrohr (erhältlich z.B. bei Fa. Aldrich) wurden unter einer Argon-Atmosphäre 1 mmol Arylhalogenid, 1 mmol Keton, 1.5 mmol Base, eine geeignete Menge an Carben-Pd-Olefin-Katalysator (1 mol%) sowie 100 mg Diethylenglycoldi-*n*-butylether (als interner Standard für die GC-Analytik) zu 5 ml Toluol gegeben. Das Rohr wurde verschlossen und in ein vorgeheiztes Siliconölbad gehängt. Nach 24 h ließ man es auf Raumtemperatur abkühlen. Die Mischung wurde in Ether suspendiert, und die überstehende Lösung wurde gaschromatographisch analysiert. Die Produkte können durch Destillation oder säulenchromatographisch (Kieselgel, Hexan/Ethylacetat-Mischungen) isoliert werden.

### Beispiele 49 bis 54

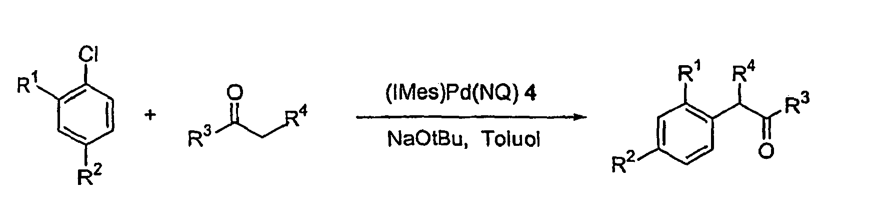

| Nr. | R¹ | R² | R³ | R⁴ | Temp. (°C) | Umsatz (%) | Ausbeute (%) |
|---|---|---|---|---|---|---|---|
| 49 | H | H | Ph | H | 120 | 100 | 86 |
| 50 | H | H | Et | Me | 120 | 100 | 91 |
| 51 | H | Me | Ph | Ph | 120 | 87 | 84 |
| 52 | H | OMe | Ph | H | 120 | 73 | 61 |
| 53 | H | CF₃ | Ph | Ph | 100 | 95 | 89 |
| 54 | F | H | Et | Me | 100 | 86 | 72 |

Allgemeine Arbeitsvorschrift zur Buchwald-Hartwig-Aminierung:

In einem Druckrohr (erhältlich z.B. bei Fa. Aldrich) wurden unter einer Argon-Atmosphäre 1 mmol Arylhalogenid, 1.2 mmol Amin, 1.4 mmol Base, eine geeignete Menge an Carben-Pd-Olefin-Katalysator (1 mol%) sowie 100 mg Diethylenglycoldi-*n*-butylether (als interner Standard für die GC-Analytik) zu 5 ml Toluol gegeben. Das Rohr wurde verschlossen und in ein vorgeheiztes Siliconölbad gehängt. Nach 24 h ließ man es auf Raumtemperatur abkühlen. Die Mischung wurde in Ether-suspendiert, und die überstehende Lösung wurde gaschromatographisch analysiert. Die Produkte können durch Destillation oder säulenchromatographisch (Kieselgel, Hexan/Ethylacetat-Mischungen) isoliert werden.

### Beispiele 55 bis 60

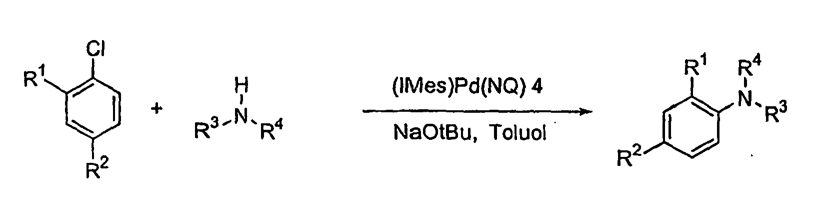

| Nr. | R¹ | R² | R³ | R⁴ | Temp. (°C) | Umsatz (%) | Ausbeute (%) |
|---|---|---|---|---|---|---|---|
| 55 | H | COMe | Ph | H | 100 | 93 | 81 |
| 56 | H | H | c-(CH₂)₅ | | 120 | 73 | 69 |
| 57 | H | Me | Ph | Me | 120 | 77 | 74 |
| 58 | H | OMe | Mesityl | H | 120 | 64 | 62 |
| 59 | H | CF₃ | Bu | Bu | 100 | 84 | 78 |
| 60 | CN | H | Ph | H | 100 | 100 | 89 |

## Patentansprüche

1. Übergangsmetallkomplex der Formel (I)
L¹-M-L² (I)
wobei
M für ein Nickel-, Palladium- oder Platinatom,
L¹ für einen Liganden, mit mindestens einer elektronenarmen olefinischen Doppelbindung die einen, zwei, drei oder vier substituenten trägt, deren Elektronegativität größer als die des Wasserstoff substituenten ist, und
L² für einen monodentaten Carbenliganden der Formel (11) oder (111) steht, 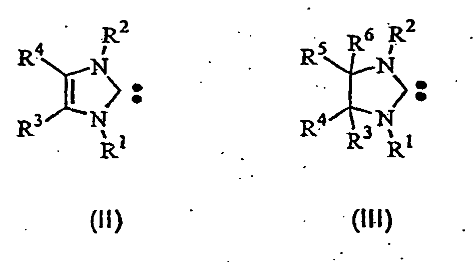 in denen
die Reste R¹ und R² unabhängig voneinander einen Alkylrest einschließlich eines Cycloalkylrestes, einen Arylrest oder Heteroarylrest darstellen, die gegebenenfalls substituiert sein können,
und die Reste R³ bis R⁶ unabhängig voneinander ausgewählt sind aus einem Wasserstoff- oder Halogenatom, -NO₂, -CN, -COOH, -CHO, -SO₃H, -SO₂-(C₁-C₈)Alkyl, -SO-(C₁-C₆)Alkyl, -NH-(C₁-C₈)Alkyl, -N((C₁-C₈)Alkyl)₂, -NHCO-(C₁-C₄)Alkyl, -CF₃, -COO-(C₁-C₈)Alkyl, -CONH₂, -CO-(C₁-C₈)Alkyl, -NHCOH, -NHCOO-(C₁-C₄)Alkyl, -CO-Phenyl, -COO-Phenyl, -CH=CH-CO₂-(C₁-C₈)Alkyl, -CH=CHCO₂H, -PO(Phenyl)₂, -PO((C₁-C₈)Alkyl)₂, einem gegebenenfalls substituierten Alkylrest, einem gegebenenfalls substituierten Arylrest, oder einem gegebenenfalls substituierten Heteroarylrest, oder mindestens zwei der Reste R³ bis R⁶ gemeinsam mit den Kohlenstoffatomen, an die sie gebunden sind, einen 4 bis 12gliedrigen Ring bilden.

2. Übergängsmetallkomplex nach Anspruch 1, wobei M für Pd steht

3. Übergangsmetallkomplex nach Anspruch 1 oder 2, wobei die elektronenarme olefinische Doppelbindung in L¹ mindestens einen elelctronenziehenden Substituenten trägt, ausgewählt aus einer Cyanogruppe, einer Aldehydgruppe, einem Ketylrest, einer Carbonsäuregruppe, einem Cärbonsaüreesterrest, Cärbonsäureamidrest, oder N-substituierten Carbonsäureamidrest.

4. Übergangsmetallkomplex nach einem der Ansprüche 1 bis 3, wobei L¹ ausgewählt ist aus Verbindungen der Formeln (IV), (V) oder (VI) 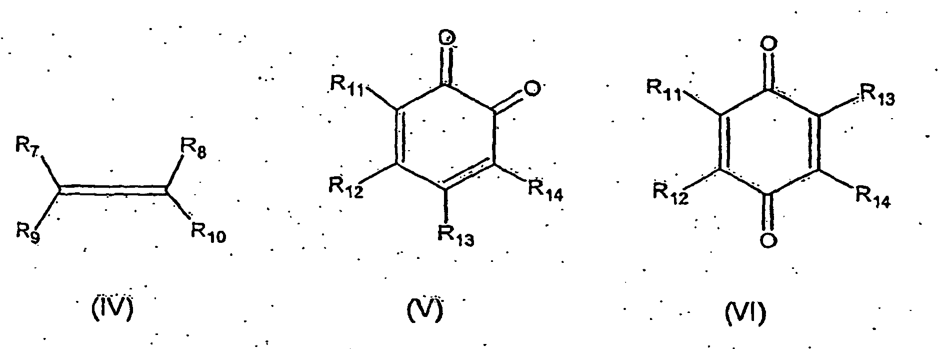 in denen
R⁷ ausgewählt ist aus -CN, -COH, -COR¹⁵, -COOH, -COOR¹⁵, -CONHR¹⁵, und -CONR¹⁵R¹⁶, wobei R¹⁵ und R¹⁶ unabhängig voneinander ein Wasserstoffatom, einen C₁-C₆ Alkylrest oder C₂-C₆ Alkenylrest darstellen und
R^{8,} R⁹ Und R¹⁰ unabhängig voneinander ausgewählt sind aus einem Wasserstoffatom, einem C₁-C₈ Alkylrest, einem C₂-C₈ Alkenylrest, einem Halogenatom, einer Hydroxylgruppe, -CN, -COH, -COR¹⁵, -COOH, -COOR¹⁵, -CONHR¹⁵, und -CONR¹⁵R¹⁶, wobei R¹⁵ und R¹⁶ wie vorstehend definiert sind, oder zwei geeignete Reste R⁷, R⁸, R⁹, R¹⁰, R¹⁵ und R¹⁶ zusammen mit den Atomen, and die sie gebunden sind, einen 5- bis 8-gliedrigen Ring bilden,
R¹¹, R¹², R¹³ und R¹⁴ unabhängig voneinander ausgewählt sind aus einem Wasserstoffatom, einem C₁-C₈ Alkylrest, einem Halogenatom oder -CN, oder jeweils zwei der Substituenten R¹¹ bis R¹⁴ zusammen mit den Atomen, an die sie gebunden sind, einen 5 bis 8-gliedrigen Ring bilden.

5. Übergangsmetallkomplex nach einem der Ansprüche 1 bis 4, wobei L¹ ausgewählt ist aus Acrylsäure, Acrylsäureester, Acrylnitril, Methacrylsäure, Methacrylsäureester, Methacrylnitril, Benzochinon, 2-Methyl-p-benzochinon, 2,5-Dimethyl-p-benzochinon, 2,3-Dichlor-5,6-dicyano-p-benzochinon, Naphthochinon, Anthrachinon, Maleinsäureanhydrid, Maleinsäureimid, Maleinsäure, Maleinsäurëester, Fumarsäure, Fumarsäureester, Metallsalze der genannten Carbonsäuren oder Tetracyanoethen.

6. Übergangsmetallkomplex nach einem der Ansprüche 1 bis 5, wobei L² ausgewählt ist aus 1,3-Bis-(2,4,6-trimethylphenyl)-imidazolin-yliden, 1,3-Bis-(2,6-dimethylphenyl)-imidazolin-yliden, 1,3-Bis-(1-adamantyl)-imidazolin-yliden, 1,3-Bis-(tert-butyl)-imidazolin-yliden, 1,3-Bis-(cyclohexyl)-imidazolin-yliden, 1,3-Bis-(o-tolyl)-imidazolin-yliden, 1,3-Bis-(2,6-diisopropyl-4-methylphenyl)-imidazolin-yliden und -1,3-Bis-(2,6-diisopropylphenyl)-imidazolin-yliden, 1,3-Bis-(2,4,6-trimethylphenyl)-4,5-dihydroimidazolin-yliden, 1,3-Bis-(2,6-dimethylphenyl)-4,5-dihydro imidazolin-yliden, 1,3-Bis-(1-adamantyl)- 4,5-dihydroimidazolin-yliden, 1,3-Bis-(tert-butyl)-4,5-dihydroimidazolin-yliden, 1,3-Bis-(cyclohexyl)-4,5-dihydro imidazolin-yliden, 1,3-Bis-(o-tolyl)-4,5-dihydroimidazolin-yliden, 1,3-Bis-(2,6-diisapropyl-4-methylphenyl)-4,5-dihydroimidazolin-yliden und 1,3-Bis-(2,6-diisopropyl phenyl)-4,5-dihydroimidazolin-yliden.

7. Übergangsmetallkomplex der folgenden Struktur (Ia) oder (Ib)
L²-M-L¹-M-L² (Ia) 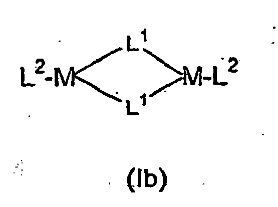
wobei L¹, L² und M unabhängig voneinander wie in einem der Ansprüche 1 bis 6 definiert sind, mit der Maßgabe, dass der verbrückende Rest L¹ so ausgewählt ist, dass er eine weitere Koordinationsstelle für ein Ni, Pt oder Pd-Atom aufweist.

8. Verfahren zur Herstellung eines Übergangsmetallkomplexes nach einem der Ansprüche 1 bis 7, umfassend das in Kontakt bringen des Liganden L² mit einem Metallkomplex, der das Fragment L¹-M sowie einen zusätzlichen Liganden enthält, der leicht durch den Liganden L² verdrängt werden kann, wobei L¹, M, und L² wie in den Ansprüchen 1 bis 7 definiert sind.

9. Verwendung eines Übergangsmetallkomplexes nach einem der Ansprüche 1 bis 7 in der homogenen Katalyse einer organischen Reaktion.

10. Verwendung nach Anspruch 9, wobei die organische Reaktion ausgewählt ist aus Olefinierungen, Arylierungen, Alkylierungen, Ketonarylierungen, Aminierungen, Etherifizierungen, Thiolisierungen, Silylierungen, Carbonylierungen, Cyanierungen oder Alkinylierungen von Aryl-X-Verbindungen, Vinyl-X-Verbindungen, wobei X eine Abgangsgruppe darstellt, oder von olefinischen Verbindungen, oder aus Hydrosilylierungen von Olefinen oder Alkinen oder Ketonen, Carbonylierungen von Olefinen, Di- und Oligomerisierungen von Olefinen, Telomerisation von Dienen oder Kreuzkupplungen mit metallorganischen Reagenzien und anderen übergangsmetallkatalysierenden Kupplungsreaktionen.

## Claims

1. Transition metal complex of the formula (I)
L¹-M-L² (I)
where
M is a nickel, palladium or platinum atom,
L¹ is a ligand having at least one electron-deficient olefinic double bond carrying one, two, three or four substituents, the electronegativity of which is greater than that of a hydrogen substituent, and
L² is a monodentate carbene ligand of the formula (II) or (III) 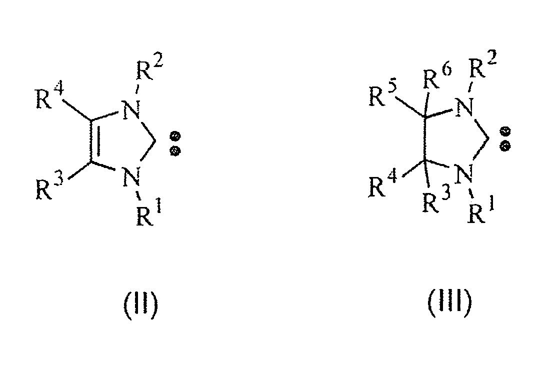 in which
the R¹ and R² radicals are each independently an alkyl radical including a cycloalkyl radical, an aryl radical or heteroaryl radical, each of which may optionally be substituted, and the R³ to R⁶ radicals are each independently selected from a hydrogen or halogen atom, -NO₂, -CN, -COOH, -CHO, -SO₃H, -SO₂-(C₁-C₈)alkyl, -SO-(C₁-C₈)alkyl, -NH-(C₁-C₈)alkyl, -N((C₁-C₈)alkyl)₂, -NHCO-(C₁-C₄)alkyl, -CF₃, -COO-(C₁-C₈)alkyl, -CONH₂, - CO-(C₁-C₈)alkyl, -NHCOH, -NH-COO-(C₁-C₄)alkyl, -CO-phenyl, -COO-phenyl, -CH=CH-CO₂-(C₁-C₈)alkyl, -CH=CHCO₂H, -PO(phenyl)₂, -PO((C₁-C₈)alkyl)₂, an optionally substituted alkyl radical, an optionally substituted aryl radical, or an optionally substituted heteroaryl radical, or at least two of the R³ to R⁶ radicals together with the carbon atoms to which they are bonded form a 4- to 12-membered ring.

2. Transition metal complex according to Claim 1 where M is Pd.

3. Transition metal complex according to Claim 1 or 2 where the electron-deficient olefinic double bond in L¹ bears at least one electron-withdrawing substituent selected from a cyano group, an aldehyde group, a ketyl radical, a carboxylic acid group, a carboxylic ester radical, carboxamide radical or N-substituted carboxamide radical.

4. Transition metal complex according to one of Claims 1 to 3 where L¹ is selected from compounds of the formulae (IV), (V) or (VI) 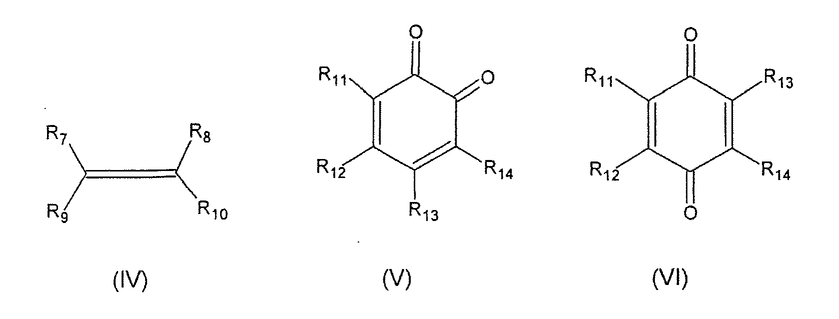 in which
R⁷ is selected from -CN, -COH, -COR¹⁵, -COOH, -COOR¹⁵, -CONHR¹⁵, and -CONR¹⁵R¹⁶, where R¹⁵ and R¹⁶ are each independently a hydrogen atom, a C₁-C₆ alkyl radical or C₂-C₆ alkenyl radical, and
R⁸, R⁹ and R¹⁰ are each independently selected from a hydrogen atom, a C₁-C₈ alkyl radical, a C₂-C₈ alkenyl radical, a halogen atom, a hydroxyl group, -CN, -COH, -COR¹⁵, - COOH, -COOR¹⁵, -CONHR¹⁵ and -CONR¹⁵R¹⁶, where R¹⁵ and R¹⁶ are each as defined above,
or two suitable R⁷, R⁸, R⁹, R¹⁰, R¹⁵ and R¹⁶ radicals together with the atoms to which they are bonded form a 5- to 8-membered ring,
R¹¹, R¹², R¹³ and R¹⁴ are each independently selected from a hydrogen atom, a C₁-C₈ alkyl radical, a halogen atom or -CN, or in each case two of the R¹¹ to R¹⁴ substituents together with the atoms to which they are bonded form a 5- to 8-membered ring.

5. Transition metal complex according to one of Claims 1 to 4 where L¹ is selected from acrylic acid, acrylic esters, acrylonitrile, methacrylic acid, methacrylic esters, methacrylonitrile, benzoquinone, 2-methyl-p-benzoquinone, 2,5-dimethyl-p-benzoquinone, 2,3-dichloro-5,6-dicyano-p-benzoquinone, naphthoquinone, anthraquinone, maleic anhydride, maleimide, maleic acid, maleic esters, fumaric acid, fumaric esters, metal salts of the carboxylic acids mentioned, or tetracyanoethene.

6. Transition metal complex according to one of Claims 1 to 5 where L² is selected from 1,3-bis(2,4,6-trimethylphenyl)imidazolinylidene, 1,3-bis(2,6-dimethylphenyl)imidazolinylidene, 1,3-bis(1-adamantyl)imidazolinylidene, 1,3-bis(tert-butyl)imidazolinylidene, 1,3-bis(cyclohexyl)imidazolinylidene, 1,3-bis(o-tolyl)imidazolinylidene, 1,3-bis(2,6-diisopropyl-4-methylphenyl)imidazolinylidene and 1,3-bis(2,6-diisopropylphenyl)imidazolinylidene, 1,3-bis(2,4,6-trimethylphenyl)-4,5-dihydroimidazolinylidene, 1,3-bis-(2,6-dimethylphenyl)-4,5-dihydroimidazolinylidene, 1,3-bis(1-adamantyl)-4,5-dihydroimidazolinylidene, 1,3-bis-tert-butyl)-4,5-dihydroimidazolinylidene, 1,3-bis(cyclohexyl)-4,5-dihydroimidazolinylidene, 1,3-bis(o-tolyl)-4,5-dihydroimidazolinylidene, 1,3-bis(2,6-diisopropyl-4-methylphenyl)-4,5-dihydroimidazolinylidene and 1,3-bis(2,6-diisopropylphenyl)-4,5-dihydroimidazolinylidene.

7. Transition metal complex of the following structure (Ia) or (Ib)
L²-M-L¹-M-L² (Ia) 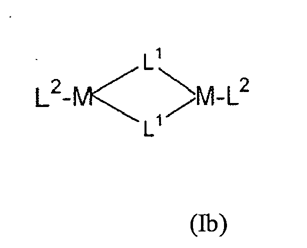
where L¹, L² and M are each independently as defined in one of Claims 1 to 6, with the proviso that the bridging L¹ radical is selected in such a way that it has a further coordination site for an Ni, Pt or Pd atom.

8. Process for preparing a transition metal complex according to one of Claims 1 to 7, comprising the contacting of the ligand L² with a metal complex which contains the fragment L¹-M and an additional ligand which can be displaced readily by the ligand L², where L¹, M and L² are each as defined in Claims 1 to 7.

9. Use of a transition metal complex according to one of Claims 1 to 7 in the homogeneous catalysis of an organic reaction.

10. Use according to Claim 9, wherein the organic reaction is selected from olefinations, arylations, alkylations, ketone arylations, aminations, etherifications, thiolizations, silylations, carbonylations, cyanations or alkynylations of aryl-X compounds or vinyl-X compounds, where X is a leaving group, or of olefinic compounds, or from hydrosilylations of olefins or alkynes or ketones, carbonylations of olefins, di- and oligomerizations of olefins, telomerization of dienes or cross-couplings with organometallic reagents and other transition metal-catalysed coupling reactions.

## Revendications

1. Complexe de métaux de transition répondant à la formule (I)
L¹-M-L² (I)
dans laquelle
M représente un atome de nickel, de palladium ou de platine,
L¹ représente un ligand ayant au moins une double liaison oléfinique pauvre en électrons, qui porte un, deux, trois ou quatre substituants dont l'électro-négativité est supérieure à celle du substituant d'hydrogène, et
L² représente un ligand carbène monodenté répondant à la formule (II) ou (III), 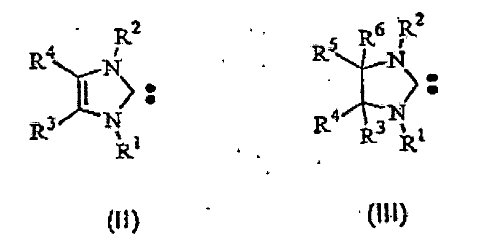 dans lesquelles
les radicaux R¹ et R² représentent indépendamment l'un de l'autre un radical alkyle y compris un radical cycloalkyle, un radical aryle ou un radical hétéroaryle, qui peuvent être éventuellement substitués,
et les radicaux R³ à R⁶ sont choisis indépendamment l'un de l'autre parmi un atome d'hydrogène ou d'halogène, -NO₂, -CN, -COOH, -CHO, -SO₃H, -SO₂-(C₁-C₈)alkyle, -SO-(C₁-C₈)alkyle, -NH-(C₁-C₈)alkyle, -N((C₁-C₈)alkyle)₂, -NHCO-(C₁-C₄)alkyle), -CF₃, -COO-(C₁-C₈)alkyle, -CONH₂, -CO-(C₁-C₈)alkyle, -NHCOH, -NHCOO-(C₁-C₄)alkyle, -CO-phényle, -COO-phényle, -CH=CH-CO₂-(C₁-C₈)alkyle, -CH=CHCO₂H, -PO(phényl)₂, -PO((C₁-C₈)alkyle)₂, un radical alkyle éventuellement substitué, un radical aryle éventuellement substitué ou un radical hétéroaryle éventuellement substitué, ou au moins deux des radicaux R³ à R⁶ forment conjointement avec les atomes de carbone auxquels ils sont liés un cycle de 4 à 12 chaînons.

2. Complexe de métaux de transition selon la revendication 1,
dans lequel M représente du Pd.

3. Complexe de métaux de transition selon la revendication 1 ou 2, dans lequel la double liaison oléfinique pauvre en électrons dans L¹ porte au moins un substituant tirant des électrons, choisi parmi un groupe cyano, un groupe aldéhyde, un radical cétyle, un groupe acide carboxylique, un radical ester d'acide carboxylique, un radical amide d'acide carboxylique ou un radical amide d'acide carboxylique substitué en N.

4. Complexe de métaux de transition selon l'une des revendications 1 à 3, dans lequel L¹ est choisi parmi des composés répondant aux formules (IV), (V) ou (VI), 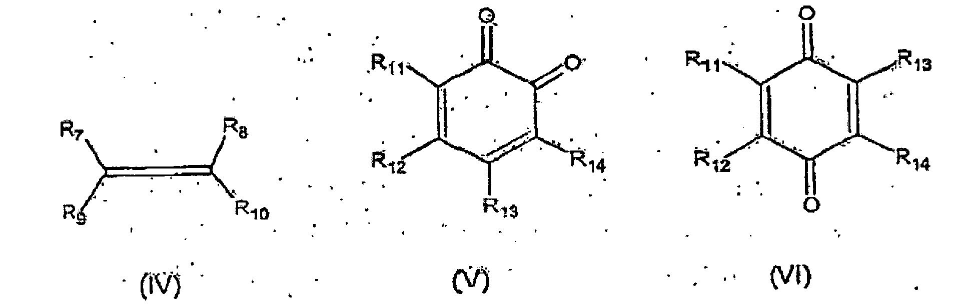 dans lesquelles
R⁷ est choisi parmi -CN, -COH, -COR¹⁵, -COOH, -COOR¹⁵, -CONHR¹⁵, et - CONR¹⁵R¹⁶, et R¹⁵ et R¹⁶ indépendamment l'un de l'autre représentent un atome d'hydrogène, un radical alkyle en C₁-C₆ ou un radical alcényle en C₂-C₆, et
R⁸, R⁹ et R¹⁰ indépendamment l'un de l'autre sont choisis parmi un atome d'hydrogène, un radical alkyle en C₁-C₈, un radical alcényle en C₂-C₈, un atome d'halogène, un groupe hydroxyle, -CN, -COH, -COR¹⁵, -COOH, -COOR¹⁵, -CONHR¹⁵, et -CONR¹⁵R¹⁶, et R¹⁵ et R¹⁶ sont tels que définis précédemment, ou deux radicaux adéquats R⁷, R⁸, R⁹, R¹⁰, R¹⁵ et R¹⁶ forment conjointement avec les atomes auxquels ils sont liés un cycle de 5 à 8 chaînons,
R¹¹, R¹², R¹³ et R¹⁴ indépendamment l'un de l'autre sont choisis parmi un atome d'hydrogène, un radical alkyle en C₁-C₈, un atome d'halogène ou -CN, ou respectivement deux des substituants R¹¹ à R¹⁴ forment conjointement avec les atomes auxquels ils sont liés un cycle de 5 à 8 chaînons.

5. Complexe de métaux de transition selon l'une des revendications 1 à 4, dans lequel L¹ est choisi parmi l'acide acrylique, l'ester d'acide acrylique, l'acrylonitrile, l'acide méthacrylique, l'ester d'acide méthacrylique, le méthacrylnitrile, la benzoquinone, la 2-méthyl-p-benzoquinone, la 2,5-diméthyl-p-benzoquinone, la 2,3-dichloro-5,6-dicyano-p-benzoquinone, la naphtoquinone, l'anthraquinone, l'anhydride d'acide maléique, l'imide d'acide maléique, l'acide maléique, l'ester d'acide maléique, l'acide fumarique, l'ester d'acide fumarique, des sels métalliques des acides carboxyliques cités ou du tétracyanoéthylène.

6. Complexe de métaux de transition selon l'une des revendications 1 à 5, dans lequel L² est choisi parmi 1,3-bis-(2,4,6-triméthylphényl)imidazoline-ylidène, 1,3-bis-(2,6-diméthylphényl)imidazoline-ylidène, 1,3-bis-(1-adamantyl)imidazoline-ylidène, 1,3-bis-(tertbutyl)imidazoline-ylidène, 1,3-bis-(cyclohexyl)imidazoline-ylidène, 1,3-bis-(o-tolyl)imidazoline-ylidène, 1,3-bis- (2,6-diisopropyl-4-méthylphényl)imidazoline-ylidène et 1,3-bis-(2,6-diisopropylphényl)imidazoline-ylidène, 1,3-bis-(2,4,6-triméthylphényl)4,5-dihydroimidazoline-ylidène, 1,3-bis-(2,6-diméthylphényl)-4,5-dihydroimidazoline-ylidène, 1,3-bis-(1-adamantyl)-4,5-dihydroimidazoline-ylidène, 1,3-bis-(tertbutyl)-4,5-dihydroimidazoline-ylidène, 1,3-bis-(cyclohexyl)-4,5-dihydroimidazoline-ylidène, 1,3-bis-(o-tolyl)-4,5-dihydroimidazoline-ylidène, 1,3-bis-2,6-diisopropyl-4-méthylphényl)- 4,5-dihydroimidazoline-ylidène et 1,3-bis-(2,6-diisopropylphényl)-4,5-dihydroimidazoline-ylidène.

7. Complexe de métaux de transition ayant la structure (Ia) ou (Ib) suivante :
L²-M-L¹-M-L² (la) 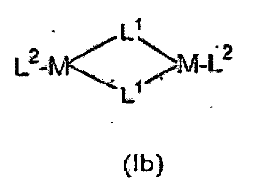
dans laquelle L¹, L² et M indépendamment l'un de l'autre sont définis comme dans l'une des revendications 1 à 6, avec la précision que le radical ponté L¹ est choisi de manière qu'il présente un autre emplacement de coordination pour un atome de Ni, Pt ou Pd.

8. Procédé de production d'un complexe de métaux de transition selon l'une des revendications 1 à 7, comprenant la mise en contact du ligand L² avec un complexe métallique qui contient le fragment L¹-M ainsi qu'un ligand supplémentaire qui peut être refoulé facilement par le ligand L², et L¹, M et L² sont définis comme dans les revendications 1 à 7.

9. Utilisation d'un complexe de métaux de transition selon l'une des revendications 1 à 7, dans la catalyse homogène d'une réaction organique.

10. Utilisation selon la revendication 9, dans laquelle la réaction organique est choisie parmi les oléfinations, les arylations, les alkylations, les cétonarylations, les aminations, les éthérifications, les thiolisations, les silylations, les carbonylations, les cyanurations ou les alkinylations de composés aryl-X, de composés vinyl-X-, dans lesquels X représente un groupe initial, ou de composés oléfiniques, ou parmi les hydrosilysations d'oléfines ou d'alkynes ou de cétones, les carbonylations d'oléfines, les di- et oligomérisations d'oléfines, la télomérisation de diènes ou de couplages croisés avec des réactifs organométalliques, et d'autres réactions de couplage catalysant des métaux de transition.
